# EUROPÄISCHE PATENTSCHRIFT

(11) **EP 3 334 797 B1**
(45) Veröffentlichungstag und Bekanntmachung des Hinweises auf die Patenterteilung: **10.11.2021**
(21) Anmeldenummer: 16748121.7
(22) Anmeldetag: 08.08.2016
(51) Int. Cl.: C09J 109/02, C08L 9/02

(54) **HAFTKLEBSTOFF AUF BASIS VON ACRYLNITRIL-BUTADIEN-KAUTSCHUKEN**
PRESSURE-SENSITIVE ADHESIVE ON THE BASIS OF ACRYLONITRILE BUTADIENE RUBBERS
MASSE AUTO-ADHÉSIVE À BASE DE CAOUTCHOUC D'ACRYLONITRILE - BUTADIÈNE

(30) Priorität: 11.08.2015 DE 102015215247
(43) Veröffentlichungstag der Anmeldung: 20.06.2018
(73) Patentinhaber: TESA SE, 22848 Norderstedt (DE)
(72) Erfinder: PÜTZ, Benjamin, 41464 Neuss (DE); SCHÖNROCK, Julia, 22527 Hamburg (DE); STREBL, Maike, 20251 Hamburg (DE); VON WEDEL-PARLOW, Tobias, 22527 Hamburg (DE); KRETZMER, Ralf, 22391 Hamburg (DE)
(74) Vertreter: tesa SE
(86) Internationale Anmeldenummer: PCT/EP2016/068841
(87) Internationale Veröffentlichungsnummer: WO 2017/025492

(56) Entgegenhaltungen:
- EP-A1- 1 426 407
- EP-A1- 1 893 709
- WO-A1-2014/126015
- DE-A1-102009 025 641

## Beschreibung

Die Erfindung betrifft die Zusammensetzung einer Acrylnitril-Butadien-Kautschukklebemasse sowie deren Verwendung.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.
Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Acrylnitril-Butadien-Kautschuke, Kurzzeichen NBR, abgeleitet von nitrile butadiene rubber, bezeichnet einen Synthesekautschuk, der durch Copolymerisation von Acrylnitril und Buta-1,3-dien in Masseverhältnissen von ungefähr 52:48 bis 10:90 gewonnen wird. Seine Herstellung erfolgt praktisch ausschließlich in wässriger Emulsion. Die dabei resultierenden Emulsionen werden als solche (NBR-Latex) eingesetzt oder zum Festkautschuk aufgearbeitet. Die Eigenschaften des Nitrilkautschuks hängen ab vom Verhältnis der Ausgangsmonomeren und von seiner Molmasse. Die aus Nitrilkautschuk zugänglichen Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus. Seine Witterungsbeständigkeit ist dagegen eher mangelhaft.

Acrylnitril-Butadien-Kautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch das Molekulargewicht bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis15 °C und führt im Gegensatz zur Heißpolymerisation, die üblicherweise bei 30 bis 40 °C durchgeführt wird, zu einer geringeren Anzahl von Kettenverzeigungen. NBR Kautschuke sind von einer Vielzahl von Herstellern wie zum Beispiel Nitriflex, Zeon, LG Chemicals und Lanxess erhältlich.

Carboxylierte NBR-Typen entstehen durch Terpolymerisation von Acrylnitril und Butadien mit kleinen Anteilen an (Meth)Acrylsäure in Emulsion. Sie zeichnen sich durch hohe Festigkeit aus. Die selektive Hydrierung der C,C-Doppelbindung von NBR führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten NBR Kautschuken gibt es auch flüssige NBR-Kautschuke. Diese werden während der Polymerisation durch die Zugabe von Polymerisationsreglern in ihrem Molekulargewicht begrenzt und werden daher als flüssige Kautschuke erhalten.

Zur Einstellung anwendungsgerechter Eigenschaften können Haftklebemassen durch Zumischen von Klebharzen, Weichmacher, Vernetzern oder Füllstoffen modifiziert werden.

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Füllstoffe werden auch zur Gewichts- beziehungsweise Volumenerhöhung in Papier, zu Kunststoffen sowie zu Kleb- und Anstrichstoffen und zu anderen Produkten beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt.

Auch bei Kautschuk und synthetischen Elastomeren kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße.

Man kann anorganische und organische Füllstoffe auch nach ihrer Dichte unterscheiden. So erhöhen die oft in Kunststoffen und auch Klebemassen verwendeten anorganischen Füllstoffe wie Kreide, Titandioxid, Calcium- und Bariumsulfat die Dichte des Composites, da sie selber eine Dichte aufweisen, die höher ist als die des Polymeren. Bei gleicher Schichtdicke ist das Flächengewicht dann höher.
Daneben gibt es Füllstoffe, die die Gesamtdichte des Composites reduzieren können. Hierzu zählen Mikrohohlkugel, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten.

Neben Füllstoffen können die Haftklebemassen auch so genannte Weichmacher enthalten. Weichmacher sind Plastifizierungsmittel wie zum Beispiel niedermolekulare Polyacrylate, Weichharze, Phosphate oder Polyphosphate, paraffinische und naphthenische Öle, Oligomere wie Oligobutadienen, -isoprenen, flüssigen Terpenharze, pflanzliche und tierische Ölen und Fette. Weichharze können die gleiche chemische Basis wie die unten aufgeführten Klebharze aufweisen, unterscheiden sich von diesen jedoch durch ihren Erweichungspunkt, der bei < 40 °C liegt.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken inerte Trennhilfsmittel wie Talkum, Silicate (Talk, Ton, Glimmer), Zinkstearat und PVC-Puder zugesetzt.

Mit zunehmender Verbreitung von elektronischen Geräten steigen die Anwendungsgebiete derselben. Daraus ergeben sich auch wachsende Anforderungen an die verbauten Komponenten. So wird es durch die Entwicklung von am Körper getragenen elektronischen Geräten (so genannte Wearables) wie etwa Smart-Watches immer wichtiger, dass die dort verwendeten Verklebungen eine hohe Resistenz gegenüber verschiedenen Chemikalien aufweisen und auch nach längerer Lagerung in verschiedenen Medien keine Klebkraft verlieren. Ähnliche Anforderungen werden auch vermehrt an andere elektronische Geräte wie Smartphones (Mobiltelefone), Tablets, Notebooks, Kameras, Videokameras, Tastauren, Touchpads und ähnliches gestellt.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)),
wie insbesondere
- Wissenschaftliche, Schifffahrts-, Vermessungs-, fotografische, Film-, optische, Wäge-, Mess-, Signal-, Kontroll-, Rettungs- und Unterrichtsapparate und - Instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und - wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische
- Solarzellen, Dünnschichtzellen,
- Feuerlöschgeräte.

Die technische Entwicklung richtet sich vermehrt auf solche Geräten, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen und chemischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden. Die erfindungsgemäß verwendete Klebemasse hat sich als besonders bevorzugt herausgestellt, solche Störeinflüsse zu überstehen und im Idealfall auch abzuschwächen oder zu kompensieren.

Die Erfindung bezieht sich dementsprechend besonders bevorzugt auf Mobilgeräte, da die erfindungsgemäß eingesetzte Klebemasse hier aufgrund ihrer unerwartet guten Eigenschaften einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse,
- Zeichenpads, Grafiktabletts, Mikrophone, Lautsprecher, Spielkonsolen, Gamepads,
- Fernsteuerungen, Fernbedienungen, Tastfelder ("Touchpads")
- Monitore, Displays, Bildschirme, berührungsempfindliche Bildschirme (Sensorbildschirme,"Touchscreen-Geräte"), Beamer
- Lesegeräte für elektronische Bücher ("E-Books"),
- Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Ein weiterer Bereich in dem die chemikalienbeständige Verklebung von Bedeutung ist, ist die Verklebung von Etiketten oder Labels zum Beispiel in Umgebungen, in denen der Kontakt mit Chemikalien möglich ist, wie zum Beispiel dem Motorraum, oder dort wo eine Manipulationssicherheit des Etiketts auch bei Anwendungen von verschiedenen Chemikalien gewährleistet sein muss.

Die WO 2006/128629 A1 betrifft eine Klebstofffolie, aufweisend zumindest eine hitzeaktivierbare Klebmasse auf Basis eines Blends aus zumindest einem Nitrilkautschuk S1 und zumindest einem Nitrilkautschuk S2, wobei der zumindest eine Nitrilkautschuk S1 einen Acrylnitrilanteil von nicht mehr als 25 Gew.-% und der zumindest eine Nitrilkautschuk S2 einen Acrylnitrilanteil von nicht weniger als 30 Gew.-% aufweist, sowie zumindest einem Reaktivharz.

Die WO 2014/126015 A1 betrifft eine Kautschukzusammensetzung für Schläuche, dadurch gekennzeichnet, dass sie 100 Gewichtsteile einer Kautschukkomponente umfasst, von denen mindestens 80 Gewichtsteile ein Acrylnitril-Butadien-Kautschuk (NBR) sind, 1 bis 4 Gewichtsteile eines Phenolharzes und als Vulkanisationsbeschleuniger 1 bis 5 Gewichtsteile einer Thiuramverbindung der allgemeinen Formel (1) 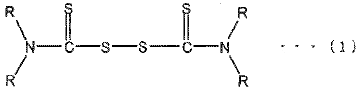 wobei R jeweils eine Alkylgruppe oder Arylgruppe mit 6 oder mehr Kohlenstoffatomen ist, wobei jedes R unterschiedlich sein kann oder zwei oder mehr davon gleich sein können. Die DE 10 2009 025641 A1 betrifft die Verwendung eines hitzeaktivierbaren Klebebandes für die Verklebung von flexiblen Leiterplatten, wobei das Klebeband eine Schicht einer Klebmasse umfassend zumindest a) ein Acrylnitril-Butadien-Copolymer, b) einem Novolakharz und c) einen Formaldehydspender als Härter, aufweist.

Aufgabe der Erfindung ist es, eine Möglichkeit aufzuzeigen, mit der Haftklebstoffe auf Basis von Acrylnitril-Butadien-Kautschuken für technische Anwendungen zugänglich sind, die das Eigenschaftsprofil von üblichen Haftklebstoffen zeigen, die möglichst kostenreduziert sind und die auch nach längerer Lagerung in verschiedenen Medien keine Klebkraft verlieren.

Gelöst wird diese Aufgabe durch eine Haftklebemasse, wie sie im Hauptanspruch niedergelegt ist. Gegenstand der Unteransprüche sind vorteilhafte Fortbildungen des Erfindungsgegenstandes. Des Weiteren umfasst die Erfindung die Verwendung dieser Haftklebemasse.

Demgemäß betrifft die Erfindung eine Haftklebemasse, die als Basispolymer mindestens einen oder mehrere feste Acrylnitril-Butadien-Kautschuke sowie Klebharze enthält, wobei der Anteil der Klebharze bei 30 bis 130 phr liegt, wobei erfindungsgemäß der Acrylnitril-Gehalt in dem oder den festen Acrylnitril-Butadien-Kautschuk(en) zwischen 10 und 25 Gew.-% liegt.

Vorzugsweise liegt der Acrylnitril-Gehalt in dem oder den festen Acrylnitril-Butadien-Kautschuk(en) zwischen 15 und 20 Gew.-%.
Die im Folgenden gemachten Angaben in phr bedeuten Gewichtsteile der betreffenden Komponente bezogen auf 100 Gewichtsteile aller festen Kautschukkomponenten der Haftklebemasse (fest/fest), also beispielsweise ohne Berücksichtigung der Klebharze. Die Angabe Gew.-% ist stets bezogen auf die Zusammensetzung der gesamten Haftklebemasse.

Den Acrylnitril-Butadien-Kautschuken können inerte Trennhilfsmittel wie Talkum, Silicate (Talk, Ton, Glimmer), Zinkstearat und PVC-Puder zugesetzt sein, und zwar insbesondere in einer Größenordnung von 3 phr.
Vorzugsweise sind die Trennhilfsmittel gewählt aus der Gruppe bestehend aus Talkum, Silicate (Talk, Ton, Glimmer), Zinkstearat und PVC-Puder.

Weiterhin vorzugsweise können dem Acrylnitril-Butadien-Kautschuk zur Verbesserung der Verarbeitbarkeit thermoplastische Elastomere wie beispielsweise Synthesekautschuke mit einem Anteil von bis zu 5 Gew.-% zugesetzt werden.
Stellvertretend genannt seien an dieser Stelle vor allem die besonders verträglichen Styrol-Isopren-Styrol (SIS)- und Styrol-Butadien-Styrol (SBS)-Typen.

Erfindungsgemäße Haftklebemassen können neben einem oder mehreren festen Acrylnitril-Butadien-Kautschuk(en) bevorzugt mindestens einen flüssigen Acrylnitril-Butadien-Kautschuk enthalten, wobei der Acrylnitril-Gehalt in dem oder den flüssigen Acrylnitril-Butadien-Kautschuk(en) zwischen 10 und 30 Gew.-% liegt.

Der Anteil der flüssigen Acrylnitril-Butadien-Kautschuke beträgt vorzugsweise bis zu 20 Gew.-%, weiter vorzugsweise zwischen 1 und 15 Gew.-%, weiter vorzugsweise zwischen 2 und 10 Gew.-%.

Flüssige Kautschuke zeichnen sich gegenüber festen Kautschuken dadurch aus, dass sie einen Erweichungspunkt von < 40 °C aufweisen.
Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Vorzugsweise besteht das Basispolymer aus festen oder festen und flüssigen Acrylnitril-Butadien-Kautschuken, weiter vorzugsweise ist neben den Acrylnitril-Butadien-Kautschuken kein weiteres Polymer in der Haftklebemasse vorhanden.
In diesem Fall ist die Haftklebemasse eine Zusammensetzung aus festen und flüssigen Acrylnitril-Butadien-Kautschuken, einem oder mehreren Klebharz(en), vorzugsweise Alterungsschutzmittel(n) und gegebenenfalls Trennhilfsmitteln, was eine bevorzugte Ausführungsform darstellt. Darüber hinaus können zusätzlich die später erläuterten Weichmacher, Füllstoffe und/oder Farbstoffe in geringen Mengen gegebenenfalls enthalten sein.

Alternativ enthält das Basispolymer mehr als 90 Gew.-%, vorzugsweise mehr als 95 Gew.-% festen und flüssigen Acrylnitril-Butadien-Kautschuk.

Unter der Bezeichnung "Klebharz", englisch "Tackifier Resins", versteht der Fachmann einen Stoff auf Harzbasis, der die Klebrigkeit erhöht.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Hydrierte Kohlenwasserstoffharze sind als Abmischkomponente, wie beispielsweise in EP 0 447 855 A1, US 4,133,731 A und US 4,820,746 A beschrieben, besonders geeignet, da durch die Abwesenheit von Doppelbindungen die Vernetzung nicht gestört werden kann.

Darüber hinaus können aber auch nicht hydrierte Harze eingesetzt werden, wenn Vernetzungspromotoren wie zum Beispiel mehrfunktionelle Acrylate eingesetzt werden.

Auch andere nicht hydrierte Kohlenwasserstoffharze, nicht hydrierte Analoga der oben beschriebenen hydrierten Harze, können eingesetzt werden.
Weiterhin können kolophoniumbasierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Gegebenenfalls handelt es sich bei den Klebharzen um Polyterpenharze auf Basis von α-Pinen und/oder ß-Pinen und/oder δ-Limone oder Terpenphenolharze.
Beliebige Kombinationen dieser können eingesetzt werden, um die Eigenschaften der resultierenden Haftklebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Besonders bevorzugt eingesetzte Harze sind Terpenphenolharze, wie sie beispielsweise von der Firma DRT unter dem Handelsnamen Dertophene oder der Firma Arizona unter dem Handelsnamen Sylvares vertrieben werden.

Die Gewichtsmenge der Harze beträgt 30 bis 130 phr, bevorzugt 50 bis 120 phr, weiter bevorzugt 60 bis 110 phr.

Der Acrylnitril-Butadien-Kautschuk basierenden Haftklebemasse können zur Einstellung von optischen und klebtechnischen Eigenschaften Additive wie Füllstoffe, Farbstoffe oder Alterungsschutzmittel (Antiozonantien, Antioxidantien (primäre und sekundäre), Lichtschutzmittel usw.) enthalten.
Als Additive zur Klebemasse werden typischerweise genutzt:
- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Schichtsilikate, Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew.-%, weiter vorzugsweise bei bis zu 5 Gew.-%.

Erfindungsgemäß sollten die Anteile sämtlicher zugesetzter Stoffe (neben Acrylnitril-Butadien-Kautschuk und Klebharz) wie Synthesekautschuke und/oder thermoplastische Elastomere und/oder Füllstoffe und/oder Farbstoffe und/oder Alterungsschutzmittel in der Summe 5 Gew.-%, vorzugsweise 2 Gew.-% nicht übertreffen.

Die aufgezählten Stoffe sind nicht zwingend, die Klebemasse funktioniert auch, ohne dass diese einzeln oder in beliebiger Kombination zugesetzt sind, also ohne Synthesekautschuke und/oder Elastomere und/oder Füllstoffe und/oder Farbstoffe und/oder Alterungsschutzmittel.

Die erfindungsgemäße Haftklebemasse ist gemäß einer bevorzugten Ausführungsform geschäumt. Die Schäumung erfolgt durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Akzo Nobel.
Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung Expancel xxx DE (Dry Expanded) von der Firma Akzo Nobel kommerziell erhältlich.

Erfindungsgemäß bevorzugt weisen mindestens 90 % aller von Mikroballons gebildeten Hohlräume einen maximalen Durchmesser von 10 bis 200 µm, stärker bevorzugt von 15 bis 200 µm, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt gemäß einer bevorzugten Ausführungsform der Erfindung zwischen größer 0 Gew. % und 10 Gew.-%, insbesondere zwischen 0,25 Gew.-% und 5 Gew.-%, ganz insbesondere zwischen 0,5 und 1,5 Gew.-% jeweils bezogen auf die Gesamtzusammensetzung der Klebemasse.
Die Angabe bezieht sich auf unexpandierte Mikroballons.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Haftklebemasse sind außerdem ― unabhängig gewählt von anderen Additiven ― Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Haftklebemasse beträgt bevorzugt 350 bis 990 kg/m³, stärker bevorzugt 450 bis 970 kg/m³, insbesondere 500 bis 900 kg/m³.
Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,35 bis 0,99, stärker bevorzugt 0,45 bis 0,97, insbesondere 0,50 bis 0,90.

Vorzugsweise wird die Haftklebemasse zur Ausrüstung von Trägern zu Klebebändern genutzt.
Als Klebebänder im erfindungsgemäßen Sinne sollen dabei alle ein- oder beidseitig mit Klebmasse beschichteten flächigen oder bandförmigen Trägergebilde verstanden werden, also neben klassischen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.
Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.
Das Klebeband kann in festen Längen wie zum Beispiel als Meterware oder aber als Endlosware auf Rollen (archimedische Spirale) zur Verfügung gestellt werden.

Der Masseauftrag (Beschichtungsstärke) der Klebemasse liegt vorzugsweise zwischen 10 und 150 g/m², weiter vorzugsweise zwischen 15 und 100 g/m², ganz besonders vorzugsweise zwischen 20 und 35 g/m².

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Ebenfalls eingesetzt werden können Trägermaterialien aus nachwachsenden Rohstoffen wie Papier, Gewebe aus zum Beispiel Baumwolle, Hanf, Jute, Brennesselfasern oder Folien aus zum Beispiel Polymilchsäure, Cellulose, modifizierter Stärke, Polyhydroxyalkanoat. Diese Aufzählung ist nicht abschließend zu verstehen, sondern im Rahmen der Erfindung ist auch die Verwendung anderer Folien möglich.

Besonders bevorzugt sind Folien aus PET.

Das Trägermaterial kann vorzugsweise ein- oder beidseitig mit der Haftlebemasse ausgerüstet sein.

Das Haftklebeband wird dadurch gebildet, dass auf den Träger partiell oder vollflächig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Klebmasse oder einer physikalischen Vorbehandlung der Trägeroberfläche zur Verbesserung der Haftung der Klebmasse auf dem Träger.
Als Primer sind die bekannten Dispersion- und Lösungsmittelsysteme verwendbar zum Beispiel auf Basis von Isopren- oder Butadien-haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.
Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.
Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, Coronavorbehandlungen wie N₂-Corona oder Plasmavorbehandlungen, geläufige Nachbehandlungen sind Kalandern, Tempern, Kaschieren, Stanzen und Eindecken.

Das Haftklebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Die Herstellung des erfindungsgemäßen Haftklebefilms kann durch übliche, dem Fachmann bekannte Beschichtungsverfahren erfolgen. Hierbei kann die Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder ―ofen entfernt werden. Alternativ kann die Beschichtung der Trägerfolie oder Trennfolie auch in einem lösemittelfreien Verfahren erfolgen. Hierzu wird der Acrylnitril-Butadien-Kautschuk in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels eines Kalanders auf die Trägerfolie oder Trennfolie beschichtet.
Mögliche Verfahren, nach denen Acrylnitril-Butadien-Kautschuk basierende Klebemassen wie die erfindungsgemäße hergestellt werden, finden sich in der DE 198 06 609 A1 sowie in den Schutzrechten WO 94/11175 A1, WO 95/25774 A1, WO 97/07963 A1.

Das erfindungsgemäße Haftklebeband hat vorzugsweise eine Klebkraft auf einem Stahluntergrund von mindestens 6,0 N/cm bei einem Masseauftrag von 50 g/m².

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Haftklebeband,
- Figur 2: ein beidseitiges Haftklebeband,
- Figur 3: ein trägerfreies Haftklebeband (Transferklebeband).

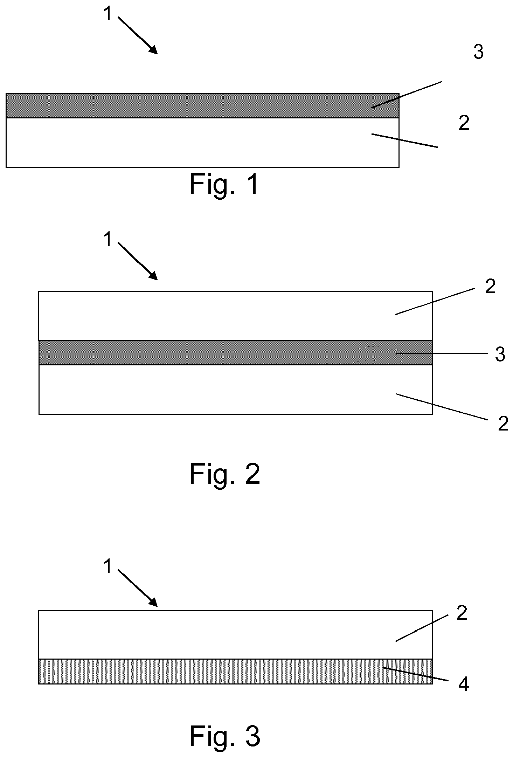

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde. Der Haftklebemassenauftrag beträgt bevorzugt zwischen 10 und 50 g/m².

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist. Der Haftklebemassenauftrag je Seite beträgt wiederum bevorzugt zwischen 10 und 200 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 10 und 100 g/m². Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

Zur Verbesserung der kohäsiven Eigenschaften der Haftklebmasse kann diese auch mit den oben beschriebenen Methoden und insbesondere durch die Zugabe von Peroxiden oder der Bestrahlung mit energiereicher Strahlung vernetzt werden. Dadurch werden besonders Eigenschaften wie der push-out oder das Verhalten im Kugelfalltest positiv beeinflusst, wohingegen Eigenschaften wie die Klebkräfte tendenziell sinken. Die Haftklebmassen sind daher bevorzugt nicht vernetzt.

### Prüfmethoden

Die Messungen werden, wenn nicht anders angegeben, bei einem Prüfklima von 23 ± 1 °C und 50 ± 5 % rel. Luftfeuchte durchgeführt.

### Erweichungspunkt

Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung); die Messungen erfolgen im Glycerolbad.

### Klebkraft

Die Prüfung der Schälfestigkeit (Klebkraft) erfolgte in Anlehnung an PSTC-1.
Ein 0,5 cm breiter Streifen des Haftklebebandes, bestehend aus einer 23 µm dicken, mit Trichloressigsäure geätzten PET-Folie und einer darauf aufgebrachten 50 µm dicken Klebebeschichtung wird auf dem Prüfuntergrund in Form einer ASTM-Stahlplatte durch fünfmaliges doppeltes Überrollen mittels einer 4 kg Rolle verklebt.
Die Oberfläche der Stahlplatte wird zuvor mit Aceton gereinigt. Die Platte wird eingespannt, und der Selbstklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt und normiert auf die Breite des Streifens in N/cm angegeben.

Die initiale Klebkraft (Klebkraft Stahl) wurde direkt im Anschluss an das Verkleben und max. 10 min nach der Verklebung gemessen.

Zur Bestimmung der chemischen Beständigkeit wurden die verklebten Muster nach dem Aufrollen unterschiedlich gelagert.

Zunächst wurden alle Muster nach dem Verkleben für 24 Stunden bei 23 °C und 50 % rel. Luftfeuchtigkeit gelagert.

Als Blindwert wurden jeweils Muster für 72 Stunden bei 65 °C und 90 % rel. Luftfeuchtigkeit gelagert. Nach der Lagerung wurden die Proben für weitere 24 Stunden bei 23 °C und 50 % rel. Luftfeuchtigkeit gelagert und anschließend vermessen.

Zur Bestimmung der chemischen Beständigkeit wurden die Muster bei 65 °C und 90 % rel. Luftfeuchtigkeit in Ölsäure (CAS Nr. 112-80-1, Qualität der Reinheit mindestens > 90 %) beziehungsweise in einer 75:25 (vol.-%) Mischung von Ethanol und Wasser gelagert. Für die Lagerung in Ethanol/Wasser wurde ein verschließbares Gefäß verwendet, um einen Verdampfungsverlust von Ethanol zu verhindern. Nach der Lagerung werden die Muster zunächst mit destilliertem Wasser abgespült und anschließend für 24 Stunden bei 23 °C und 50 % rel. Luftfeuchtigkeit gelagert. Erst dann erfolgte wie oben beschrieben die Messung der Klebkraft. Die Retention der Klebkraft wird dabei durch das Verhältnis des Messwertes nach der Lagerung in Ölsäure beziehungsweise Ethanol/Wasser (im Verhältnis 75/25) zum Blindwert berechnet.

### Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 25 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

### Kugelfalltest (Schlagzähigkeit, Ball drop)

Aus dem zu untersuchenden Klebeband wurde eine quadratische, rahmenförmige Probe ausgeschnitten (Außenmaße 33 mm × 33 mm; Stegbreite 3,0 mm; Innenmaße (Fensterausschnitt) 27 mm × 27 mm). Diese Probe wurde auf einen ABS-Rahmen (Außenmaße 50 mm × 50 mm; Stegbreite 12,5 mm; Innenmaße (Fensterausschnitt) 25 mm × 25 mm; Dicke 3 mm) geklebt. Auf der anderen Seite des doppelseitigen Klebebands wurde ein PMMA-Fenster von 35 mm × 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm². Die Verklebung wurde bei 23 °C für 5 s mit 10 bar gepresst und für 24 Stunden konditioniert bei 23 °C / 50 % relativer Feuchte gelagert.
Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte. Auf die so angeordnete Probe wurde senkrecht aus einer Höhe von 250 cm (durch das Fenster des ABS-Rahmens hindurch) eine Stahlkugel mit dem jeweils angegebenen Gewicht zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte.

Der Kugelfalltest gilt als bestanden, wenn sich die Verklebung bei keiner der drei Untersuchungen gelöst hat.
Dabei ist die maximale Höhe, bei der der Test noch bestanden wird, als Messwert angegeben.

### Push-out-Festigkeit (z-Ebene)

Mittels des Push-Out-Test lasen sich Aussagen darüber gewinnen, wie hoch die Beständigkeit einer Verklebung eines Bauteils in einem rahmenförmigen Körper ist, etwa eines Fensters oder Displays in einem Gehäuse.
Aus dem zu untersuchenden Klebeband wurde eine rechteckige, rahmenförmige Probe ausgeschnitten (Außenmaße 43 mm × 33 mm; Stegbreite jeweils 2,0 mm, Innenmaße (Fensterausschnitt) 39 mm × 29 mm, Klebefläche auf Ober- und Unterseite jeweils 288 mm²). Diese Probe wurde auf einen rechteckigen ABS-Kunststoffrahmen (ABS = Acrylnitril-Butadien-Styrol-Copolymere) (Außenmaße 50 mm × 40 mm, Stegbreite der langen Stege jeweils 8 mm; Stegbreite der kurzen Stege jeweils 10 mm; Innenmaße (Fensterausschnitt) 30 mm × 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm × 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 288 mm². Die Verklebung wurde bei 23°C für 5 s mit 10 bar gepresst und für 24 Stunden konditioniert bei 23 °C / 50 % relativer Feuchte gelagert.
Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte.
Ein Druckstempel wird nun mit einer konstanten Geschwindigkeit von 10 mm/s senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft Fₘₐₓ im Kraft-Zeit-Diagramm in N) wird als Antwort des Push-Out-Tests registriert.

### Statische Glasübergangstemperatur Tg

Glasübergangspunkte ― synonym als Glasübergangstemperaturen bezeichnet ― werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

Im Folgenden soll die Erfindung anhand mehrerer Beispiele näher erläutert werden, ohne damit die Erfindung unnötig einschränken zu wollen.

### Herstellung der Haftklebmassen

Die in den Beispielen aufgeführten Haftklebemassen wurden als Lösemittel-basierte Massen in einem Kneter mit Doppelsigmaknethaken homogenisiert. Als Lösemittel wurde Butanon (Methyl-ethylketon, 2-Butanon) verwendet. Der Kneter wurde dabei mittels Wasserkühlung gekühlt.

In einem ersten Schritt wurde zunächst der feste Acrylnitril-Butadien-Kautschuk mit der gleichen Menge Butanon für 12 Stunden bei 23 °C vorgequollen. Anschließend wurde dieser sogenannte Vorbatch für 2 Stunden geknetet. Anschließend wurde nochmals die oben gewählte Menge Butanon und gegebenenfalls der flüssige NBR Kautschuk in zwei Schritten zugegeben und jeweils für 10 min geknetet. Anschließend wurde das Klebharz als Lösung in Butanon mit einem Feststoffgehalt von 50 % zugegeben und weitere 20 min homogen geknetet. Der finale Feststoffgehalt wird durch Butanonzugabe auf von 30 Gew.-% eingestellt.

### Herstellung der Prüfmuster

Die Haftklebmasse wurde auf einem handelsüblichen Laborstreichtisch (zum Beispiel von der Firma SMO (Sondermaschinen Oschersleben GmbH)) mit Hilfe eines Streichmessers auf eine 23 µm dicke, mit Trichloressigsäure geätzte PET-Folie beschichtet. Das Butanon wurde bei 105 °C im Umlufttrockenschrank für 10 Minuten abgedampft. Die Spaltbreite beim Beschichten wurde so eingestellt, dass nach dem Abdampfen des Lösemittels ein Masseauftrag von 50 g/m² erreicht wurde. Anschließend wurden die vom Lösemittel befreiten Filme mit silikonisierter PET-Folie abgedeckt und bis zur weiteren Ausprüfung bei 23 °C und 50 % rel. Luftfeuchtigkeit gelagert.

### Beispiele

| **Rohstoff** | **Beispiel 1** | **Beispiel 2** | **Beispiel 3** | **Beispiel 4*** | **Beispiel 5*** |
|---|---|---|---|---|---|
| | Festeinwaage [%] | Festeinwaage [%] | Festeinwaage [%] | Festeinwaage [%] | Festeinwaage [%] |
| Nipol N41H80 | 0% | 0% | 0% | 0% | 0% |
| Nipol 401 | 67% | 67% | 67% | 50% | 57% |
| Nipol DN 2850 | 0% | 0% | 0% | 0% | 0% |
| Nipol 1042 S | 0% | 0% | 0% | 0% | 0% |
| Dertophene T 110 | 33% | 0% | 0% | 0% | 0% |
| Dertophene T | 0% | 0% | 0% | 33% | 33% |
| Kolophonium | 0% | 0% | 0% | 0% | 0% |
| Novares TK 90 | 0% | 33% | 0% | 0% | 0% |
| Cumar 130 | 0% | 0% | 33% | 0% | 0% |
| NovaresC120VL | 0% | 0% | 0% | 0% | 0% |
| PiccoAR85 | 0% | 0% | 0% | 0% | 0% |
| Nipol 1312 LV | 0% | 0% | 0% | 17% | 10% |

| | | | | | |
|---|---|---|---|---|---|
| Festeinwaage [%] bedeutet jeweils [Gew.-%]. *: nicht erfindungsgemäß | | | | | |

| **Rohstoff** | **Beispiel 6*** | **Beispiel 7*** | **Beispiel 8*** | **Beispiel 9** |
|---|---|---|---|---|
| | Festeinwaage [%] | Festeinwaage [%] | Festeinwaage [%] | Festeinwaage [%] |
| Nipol N41H80 | 0% | 0% | 0% | 0% |
| Nipol 401 | 62% | 0% | 0% | 50% |
| Nipol DN 2850 | 0% | 67% | 57% | 0% |
| Nipol 1042 S | 0% | 0% | 0% | 0% |
| Dertophene T 110 | 0% | 0% | 0% | 0% |
| Dertophene T | 33% | 0% | 0% | 50% |
| Kolophonium | 0% | 0% | 0% | 0% |
| Novares TK 90 | 0% | 0% | 0% | 0% |
| Cumar 130 | 0% | 0% | 0% | 0% |
| NovaresC120VL | 0% | 0% | 0% | 0% |
| PiccoAR85 | 0% | 33% | 29% | 0% |
| Nipol 1312 LV | 5% | 0% | 14% | 0% |

| **Rohstoff** | **Vergleichsbeispiel 1** | **Vergleichsbeispiel 2** | **Vergleichsbeispiel 3** | **Vergleichsbeispiel 4** |
|---|---|---|---|---|
| | Festeinwaage [%] | Festeinwaage [%] | Festeinwaage [%] | Festeinwaage [%] |
| Nipol N41H80 | 50% | 0% | 0% | 57% |
| Nipol 401 | 0% | 0% | 0% | 0% |
| Nipol DN 2850 | 0% | 0% | 0% | 0% |
| Nipol 1042 S | 0% | 67% | 57% | 0% |
| Dertophene T 110 | 50% | 0% | 0% | 0% |
| Dertophene T | 0% | 0% | 0% | 0% |
| Kolophonium | 0% | 0% | 29% | 29% |
| Novares TK 90 | 0% | 0% | 0% | 0% |
| Cumar 130 | 0% | 0% | 0% | 0% |
| NovaresC120VL | 0% | 0% | 0% | 0% |
| PiccoAR85 | 0% | 33% | 0% | 0% |
| Nipol 1312 LV | 0% | 0% | 14% | 14% |

| | | | | |
|---|---|---|---|---|
| *: nicht erfindungsgemäß | | | | |

| **Name** | **ACN-Gehalt** | **Mooney Viskosität ML 1+4, 100 °C** | **T_{G}** |
|---|---|---|---|
| | [Gew.-%] | [MU] | [°C] |
| Nipol 401 | 18,5 | 73 bis 83 | -37 |
| Nipol 1312 LV | 26,5 | 9000 bis 16000* | -23 |
| Nipol DN 2850 | 28,0 | 45 bis 55 | -22 |
| Nipol 1042 S | 33,5 | 73 bis 83 | -17 |
| Nipol N41H80 | 41,0 | 72 bis 88 | -9 |

| | | | |
|---|---|---|---|
| *: Bei Nipol 1312LV ist die Brookfieldviskosität angegeben in [mPa * s], gemessen mit Spindel 4, 12 rpm, 50 °C | | | |

| Bezeichnung | Chemische Basis | Hersteller | Erweichungspunkt |
|---|---|---|---|
| Dertophene T 110 | Terpenphenolharz | DRT | 112 °C |
| Dertophene T | Terpenphenolharz | DRT | 95 °C |
| Kolophonium | Abietinsäure | | 85 °C |
| Novares TK 90 | Aliphatisch modifiziertes Kohlenwasserstoff- Harz | Rütgers | 85 bis 95 °C |
| Cumar 130 | Cumaron.Inden-Harz | Neville | 125 bis 135 °C |
| Novares C120-VL | Cumaron.Inden-Harz | Rütgers | 115 bis 125 °C |
| Picco AR85 | Aromatisch modifiziertes Kohlenwasserstoff Harz Eastman | Eastman | 87 °C |

| **Test** | | **Beispiel 1** | **Beispiel 2** | **Beispiel 3** | **Beispiel 4** | **Beispiel 5** |
|---|---|---|---|---|---|---|
| Klebkraft ASTM Stahl | [N/cm] | 5,9 | 6,3 | 3,8 | 12,4 | 8,4 |
| Blindwert (3d, 65 °C) | [N/cm] | 16,5 | 26,0 | 11,0 | 23,4 | 27,5 |
| 3d, 65 °C, Ölsäure | [N/cm] | 4,9 | 7,9 | 6,4 | 4,9 | 6,1 |
| 3d, 65 °C, EtOH/H₂0 | [N/cm] | 4,46 | 5,9 | 9,9 | 5,35 | 8,4 |
| push-out | [N] | 46 | | | 41 | 47 |
| ball-drop | [cm] | 230 | | | 250 | 250 |
| Rolling Ball Tack | [mm] | 46 | 54 | 49 | 17 | 28 |

| **Test** | | **Beispiel 6** | **Beispiel 7** | **Beispiel 8** | **Beispiel 9** | |
|---|---|---|---|---|---|---|
| Klebkraft ASTM Stahl | [N/cm] | 12,8 | 5,2 | 12,6 | 7,8 | |
| Blindwert (3d, 65 °C) | [N/cm] | 28,7 | 10,6 | 28,3 | 8,0 | |
| 3d, 65 °C, Ölsäure | [N/cm] | 5,5 | 3,6 | 4,6 | 4,3 | |
| 3d, 65 °C, EtOH/H₂0 | [N/cm] | 9,5 | 5,7 | 4,9 | 10,4 | |
| push-out | [N] | 57 | | | 94 | |
| ball-drop | [cm] | 250 | | | 250 | |
| Rolling Ball Tack | [mm] | 52 | 48 | 23 | 30 | |

| **Test** | | **Vergleichsbeispiel 1** | **Vergleichsbeispiel 2** | **Vergleichsbeispiel 3** | **Vergleichsbeispiel 4** | |
|---|---|---|---|---|---|---|
| Klebkraft ASTM Stahl | [N/cm] | taub | taub | taub | 2,8 | |
| Blindwert (3d, 65 °C) | [N/cm] | | | | 4,1 | |
| 3d, 65 °C, Ölsäure | [N/cm] | | | | 0,5 | |
| 3d, 65 °C, EtOH/H₂0 | [N/cm] | | | | 0 | |
| push-out | [N] | | | | | |
| ball-drop | [cm] | | | | | |
| Rolling Ball Tack | [mm] | >250 | >250 | >250 | 60 | |

Zur Herstellung der Muster für den Kugelfall- und push-out-Test wurde die Haftklebemasse mit Hilfe des Laborstreichtisches auf eine silikonisierte PET-Folie beschichtet. Die Beschichtungen wurden anschließend bei 105 °C für 10 min getrocknet. Die Klebeschichten mit einem Schichtdicke von 50 µm wurden beidseitig auf eine coronavorbehandelte 12 µm PET-Folie kaschiert, so dass ein doppelseitiges Klebebandmuster resultierte.

Wie aus den Beispielen hervorgeht, zeigt die erfindungsgemäße Klebemasse auch nach 72-stündiger Lagerung in 65 °C warmer Ölsäure beziehungsweise in Ethanol/Wasser noch eine signifikante Klebkraft.

Überraschenderweise und für den Fachmann nicht vorhersehbar ist diese verbesserte Eigenschaft auf den Acrylnitril-Gehalt in dem Acrylnitril-Butadien-Kautschuk zurückzuführen. Wenngleich die chemische Beständigkeit des Acryl-Nitril-Butadien-Kautschuks bekannt ist und für viele Anwendungen im Automobilbereich genutzt wird, wird eine gute Beständigkeit gegen unpolare Medien (hier Ölsäure) üblicherweise mit einem hohen ACN-Gehalt erreicht. Üblicherweise werden daher Acrylnitril-Butadien-Kautschuke mit einem ACN Gehalt von 41 Gew.-% oder höher eingesetzt. Die Beimischung von Kautschuken mit niedrigen ACN Gehalten erfolgt in der Regel lediglich zur Einstellung der mechanischen Eigenschaften, oft jedoch auf Kosten der chemischen Beständigkeit. Völlig überraschend hat sich gezeigt, dass ausschließlich Haftklebemassen auf der Basis von Acrylnitril-Butadien-Kautschuken mit einem ACN-Gehalt von weniger als 30 Gew.-% eine ausreichende chemische Resistenz gegen unpolare Medien aufweisen. Besonders hohe Beständigkeiten gegen polare und unpolare Medien werden mit Haftklebemassen erzielt, die Acrylnitril-Butadien-Kautschuke mit einem ACN Gehalt von kleiner 25 Gew.-% und noch besser kleiner 20 Gew.-% enthalten.

Überraschend ist zudem dass die erfindungsgemäßen Haftklebemassen sowohl nach dem Einwirken von sehr unpolaren Chemikalien (beispielsweise Ölsäure), als auch sehr polaren Chemikalien Ethanol/Wasser die guten Klebkräfte erhalten.

Bei der Beurteilung der Beständigkeit ist dabei nicht nur das absolute Niveau der Klebkraft von Interesse, sondern auch die prozentuale Änderung nach dem Einwirken der Chemikalien, im Vergleich zum Blindwert.

Die genannten Chemikalien (Ölsäure und Ethanol/Wasser) stehen dabei nur stellvertretend. Ebenso sind die erfindungsgemäßen Haftklebemassen beständig gegen Chemikalien wie Sebum, Parfüme, verdünnte Schwefelsäure, Öl-/Wasser-Emulsionen und Wasser/Öl-Emulsionen wie sie in Kosmetikprodukten eingesetzt werden, und Bremsflüssigkeit. Auch diese Liste ist nicht abschließend zu verstehen, sondern hat beispielhaften Charakter.

Die gemessenen Werte für den Kugelfalltest (ball-drop) und den push-out Test belegen eine ausgezeichnete Eignung der erfindungsgemäßen Haftklebmassen zur Verklebung von Fenstern oder Displays in Gehäusen. Dabei ist insbesondere die im Kugelfalltest ermittelte Schockbeständigkeit überraschend.

## Patentansprüche

1. Haftklebemasse, die als Basispolymer mindestens einen oder mehrere feste Acrylnitril-Butadien-Kautschuke sowie Klebharze enthält, wobei der Anteil der Klebharze bei 30 bis 130 phr liegt,
**dadurch gekennzeichnet, dass**
der Acrylnitril-Gehalt in dem oder den festen Acrylnitril-Butadien-Kautschuk(en) zwischen 10 und 25 Gew.-% liegt.

2. Haftklebemasse nach Anspruch 1,
**dadurch gekennzeichnet, dass**
das Basispolymer nur aus Acrylnitril-Butadien-Kautschuk besteht, weiter vorzugsweise dass neben Acrylnitril-Butadien-Kautschuk kein weiteres Polymer in der Haftklebemasse vorhanden ist.

3. Haftklebemasse nach Anspruch 1 oder 2,
**dadurch gekennzeichnet, dass**
der Acrylnitril-Gehalt in dem Acrylnitril-Butadien-Kautschuk zwischen 15 und 20 Gew.-% liegt.

4. Haftklebemasse nach zumindest einem der Ansprüche 1 bis 3,
**dadurch gekennzeichnet, dass**
der Anteil der Klebharze 50 bis 120 phr, weiter bevorzugt 60 bis 110 phr beträgt.

5. Haftklebemasse nach zumindest einem der vorherigen Ansprüche,
**dadurch gekennzeichnet, dass**
als Klebharze Terpenphenolharze und/oder Polyterpene eingesetzt werden.

6. Haftklebemasse nach zumindest einem der vorherigen Ansprüche,
**dadurch gekennzeichnet, dass**
in der Haftklebemasse mindestens ein flüssiger Acrylnitril-Butadien-Kautschuk enthalten ist, wobei der Acrylnitril-Gehalt in dem oder den flüssigen Acrylnitril-Butadien-Kautschuk(en) zwischen 10 und 30 Gew.-% liegt.

7. Haftklebemasse nach Anspruch 5,
**dadurch gekennzeichnet, dass**
der Anteil der flüssigen Acrylnitril-Butadien-Kautschuke bis zu 20 Gew.-% beträgt, weiter vorzugsweise zwischen 1 und 15 Gew.-%, weiter vorzugsweise zwischen 2 und 10 Gew.-%.

8. Haftklebemasse nach zumindest einem der vorherigen Ansprüche,
**dadurch gekennzeichnet, dass**
die Haftklebemasse aus einer Zusammensetzung nur aus festen oder nur aus festen und flüssigen Acrylnitril-Butadien-Kautschuk und Klebharz sowie gegebenenfalls Alterungsmitteln und Trennhilfsmitteln besteht.

9. Haftklebemasse nach zumindest einem der vorherigen Ansprüche,
**dadurch gekennzeichnet, dass**
dass die Anteile sämtlicher zugesetzter Stoffe (neben Acrylnitril-Butadien-Kautschuk und Klebharz) wie Synthesekautschuke und/oder thermoplastische Elastomere und/oder Füllstoffe und/oder Farbstoffe und/oder Alterungsschutzmittel und/oder Weichmacher und/oder Trennhilfsmittel in der Summe 5 Gew.-%, vorzugsweise 2 Gew.-% nicht übertreffen.

10. Verwendung einer Haftklebemasse nach zumindest einem der vorherigen Ansprüche in einem ein- oder beidseitig klebenden Klebeband.

11. Verwendung einer Haftklebemasse nach zumindest einem der vorherigen Ansprüche in einem ein- oder beidseitig klebenden Klebeband, wobei der Masseauftrag (Beschichtungsstärke) der Haftklebemasse zwischen 10 und 150 g/m², vorzugsweise zwischen 15 und 100 g/m², besonders vorzugsweise zwischen 20 und 35 g/m² liegt.

12. Verwendung einer Haftklebemasse nach zumindest einem der vorherigen Ansprüche, gegebenenfalls in einem ein- oder beidseitig klebenden Klebeband, zur Verklebung von Teilen in elektronischen Geräten, insbesondere in mobilen elektronischen Geräten wie Tablets, Mobiltelefonen, Smart-Watches und anderen Wearables.

13. Verwendung einer Haftklebemasse nach zumindest einem der vorherigen Ansprüche zur Verklebung von Etiketten oder Labels.

## Claims

1. Pressure-sensitive adhesive which comprises as base polymer at least one or a plurality of solid acrylonitrile-butadiene rubber(s) and also tackifier resins, the fraction of the tackifier resins being 30 to 130 phr,
**characterized in that**
the acrylonitrile content in the solid acrylonitrile-butadiene rubber(s) is between 10 and 25 wt%.

2. Pressure-sensitive adhesive according to Claim 1,
**characterized in that**
the base polymer consists only of acrylonitrile-butadiene rubber, more preferably **in that** besides acrylonitrile-butadiene rubber there is no further polymer in the pressure-sensitive adhesive.

3. Pressure-sensitive adhesive according to Claim 1 or 2,
**characterized in that**
the acrylonitrile content in the acrylonitrile-butadiene rubber is between 15 and 20 wt%.

4. Pressure-sensitive adhesive according to at least one of Claims 1 to 3,
**characterized in that**
the fraction of the tackifier resins is 50 to 120 phr, more preferably 60 to 110 phr.

5. Pressure-sensitive adhesive according to at least one of the preceding claims,
**characterized in that**
tackifier resins used comprise terpene-phenolic resins and/or polyterpenes.

6. Pressure-sensitive adhesive according to at least one of the preceding claims,
**characterized in that**
the pressure-sensitive adhesive comprises at least one liquid acrylonitrile-butadiene rubber, the acrylonitrile content in the liquid acrylonitrile-butadiene rubber(s) being between 10 and 30 wt%.

7. Pressure-sensitive adhesive according to Claim 5,
**characterized in that**
the fraction of the liquid acrylonitrile-butadiene rubbers is up to 20 wt%, more preferably between 1 and 15 wt%, more preferably between 2 and 10 wt%.

8. Pressure-sensitive adhesive according to at least one of the preceding claims,
**characterized in that**
the pressure-sensitive adhesive consists of a composition only of solid or only of solid and liquid acrylonitrile-butadiene rubber and tackifier resin and also, optionally, aging agents and release assistants.

9. Pressure-sensitive adhesive according to at least one of the preceding claims,
**characterized in that**
the fractions of all added substances (apart from acrylonitrile-butadiene rubber and tackifier resin) such as synthetic rubbers and/or thermoplastic elastomers and/or fillers and/or dyes and/or aging inhibitors and/or plasticizers and/or release assistants do not in total exceed 5 wt%, preferably 2 wt%.

10. Use of a pressure-sensitive adhesive according to at least one of the preceding claims in a single-sided or double-sided adhesive tape.

11. Use of a pressure-sensitive adhesive according to at least one of the preceding claims in a single-sided or double-sided adhesive tape, where the coat weight (coating thickness) of the pressure-sensitive adhesive is between 10 and 150 g/m², preferably between 15 and 100 g/m², more preferably between 20 and 35 g/m².

12. Use of a pressure-sensitive adhesive according to at least one of the preceding claims, optionally in a single-sided or double-sided adhesive tape, for bonding parts in electronic devices, especially in mobile electronic devices such as tablets, cell phones, smartwatches, and other wearables.

13. Use of a pressure-sensitive adhesive according to at least one of the preceding claims for bonding decals or labels.

## Revendications

1. Masse autoadhésive, qui, en tant que polymère de base, contient au moins un ou plusieurs caoutchoucs d'acrylonitrile-butadiène solides ainsi que des résines adhésives, la proportion des résines adhésives se situant dans la plage de 30 à 130 phr,
**caractérisée en ce que**
la teneur en acrylonitrile dans le ou les caoutchouc(s) d'acrylonitrile-butadiène solide(s) se situe entre 10 et 25 % en poids.

2. Masse autoadhésive selon la revendication 1,
**caractérisée en ce que**
le polymère de base n'est constitué que de caoutchouc d'acrylonitrile-butadiène, plus préférablement **en ce qu'**outre le caoutchouc d'acrylonitrile-butadiène aucun autre polymère n'est présent dans la masse autoadhésive.

3. Masse autoadhésive selon la revendication 1 ou 2,
**caractérisée en ce que**
la teneur en acrylonitrile dans le caoutchouc d'acrylonitrile-butadiène se situe entre 15 et 20 % en poids.

4. Masse autoadhésive selon au moins l'une quelconque des revendications 1 à 3,
**caractérisée en ce que**
la teneur en résines adhésives est de 50 à 120 phr, plus préférablement de 60 à 110 phr.

5. Masse autoadhésive selon au moins l'une quelconque des revendications précédentes,
**caractérisée en ce que** des résines de terpènephénol et/ou des polyterpènes sont utilisés en tant que résines adhésives.

6. Masse autoadhésive selon au moins l'une quelconque des revendications précédentes,
**caractérisée en ce que**
au moins un caoutchouc d'acrylonitrile-butadiène liquide est contenu dans la masse autoadhésive, la teneur en acrylonitrile dans le ou les caoutchouc(s) d'acrylonitrile-butadiène liquide(s) se situant entre 10 et 30 % en poids.

7. Masse autoadhésive selon la revendication 5,
**caractérisée en ce que**
la proportion des caoutchoucs d'acrylonitrile-butadiène liquides va jusqu'à 20 % en poids, plus préférablement est entre 1 et 15 % en poids, plus préférablement entre 2 et 10 % en poids.

8. Masse autoadhésive selon au moins l'une quelconque des revendications précédentes,
**caractérisée en ce que**
la masse autoadhésive est constituée d'une composition composée seulement de caoutchouc d'acrylonitrile-butadiène solide ou seulement de caoutchouc d'acrylonitrile-butadiène solide et liquide, et de résine adhésive ainsi qu'éventuellement d'agents de vieillissement et d'auxiliaires de séparation.

9. Masse autoadhésive selon au moins l'une quelconque des revendications précédentes,
**caractérisée en ce que**
les proportions de toutes les matières ajoutées (outre le caoutchouc d'acrylonitrile-butadiène et la résine adhésive) comme des caoutchoucs de synthèse et/ou des élastomères thermoplastiques et/ou des charges et/ou des colorants et/ou des agents de vieillissement et/ou des plastifiants et/ou des auxiliaires de séparation ne totalisent pas plus de 5 % en poids, de préférence pas plus de 2 % en poids.

10. Utilisation d'une masse autoadhésive selon au moins l'une des revendications précédentes dans un ruban adhésif collant sur une face ou sur deux faces.

11. Utilisation d'une masse autoadhésive selon au moins l'une des revendications précédentes dans un ruban adhésif collant sur une face ou sur deux faces, le dépôt massique (épaisseur de revêtement) de la masse autoadhésive se situant entre 10 et 150 g/m², de préférence entre 15 et 100 g/m², particulièrement préférablement entre 20 et 35 g/m².

12. Utilisation d'une masse autoadhésive selon au moins l'une des revendications précédentes, éventuellement dans un ruban adhésif collant sur une face ou sur deux faces, pour le collage de pièces dans des appareils électroniques, en particulier dans des appareils électroniques mobiles comme des tablettes, des téléphones mobiles, des montres intelligentes et autres objets portables.

13. Utilisation d'une masse autoadhésive selon au moins l'une des revendications précédentes pour le collage d'étiquettes ou de labels.
